(19) Europäisches Patentamt
European Patent Office
Office européen des brevets

(11) Veröffentlichungsnummer : **0 021 314**
**B1**

(12) # EUROPÄISCHE PATENTSCHRIFT

(45) Veröffentlichungstag der Patentschrift : **09.03.83**

(51) Int. Cl.³ : **C 08 G 18/80**, C 09 D 5/40, C 08 K 3/28

(21) Anmeldenummer : **80103358.0**

(22) Anmeldetag : **17.06.80**

(54) **Stabilisierte, mit Alkanolaminen partiell blockierte Di- oder Polyisocyanate und Verfahren zur deren Herstellung.**

(30) Priorität : **22.06.79 AT 4394/79**

(43) Veröffentlichungstag der Anmeldung : **07.01.81 Patentblatt 81/01**

(45) Bekanntmachung des Hinweises auf die Patenterteilung : **09.03.83 Patentblatt 83/10**

(84) Benannte Vertragsstaaten : **BE CH DE FR GB IT LI NL SE**

(56) Entgegenhaltungen :
**AT B 342 169**
**DE A 2 707 659**

(73) Patentinhaber : **Vianova Kunstharz Aktiengesellschaft**
**A-8402 Werndorf (AT)**

(72) Erfinder : **Pampouchidis, Georg, Dr.**
**Obere Teichstrasse 31**
**A-8010 Graz (AT)**
Erfinder : **Deu, Herbert, Dipl. Ing.**
**Millöckergasse 6**
**A-8401 Kalsdorf (AT)**

(74) Vertreter : **Blum, Rudolf E. et al**
**c/o E. Blum & Co Patentanwälte Vorderberg 11**
**CH-8044 Zürich (CH)**

**EP 0 021 314 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Stabilisierte, mit Alkanolaminen partiell blockierte Di- oder Polyisocyanate und Verfahren zu deren Herstellung.

Die vorliegende Erfindung betrifft mit Alkanolaminen partiell blockierte Di- oder Polyisocyanate, die ein Zusatzmittel zur Unterdrückung von Nebenreaktionen bei der Herstellung und Lagerung enthalten.

Mit Alkanolaminen partiell blockierte Di- oder Polyisocyanate sind relativ unbeständig, da durch ihren basischen Charkater die Reaktionsfähigkeit der freien Isocyanatgruppen stark katalysiert wird. Dies führt zu unerwünschten Additionsreaktionen, die vermutlich nach dem folgenden Reaktionsschema ablaufen :

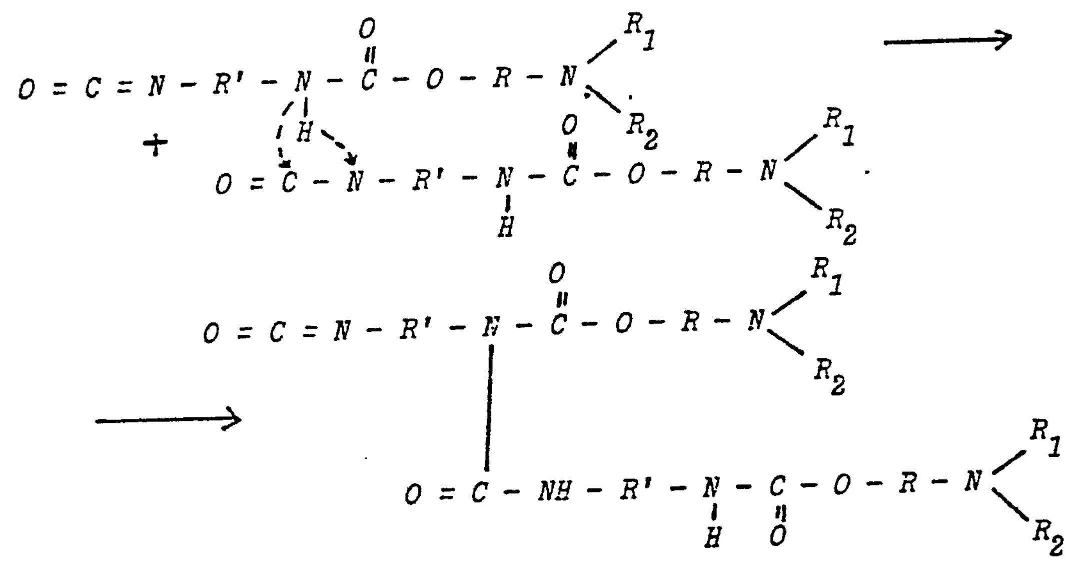

Diese unerwünschte Nebenreaktion führt nach kurzer Zeit zu einem Absinken des Isocyanatwertes und zu einer Viskositätserhöhung der Isocyanatverbindung.

Isocyanatverbindungen der genannten Art werden beispielsweise als Zwischenprodukte zur Einführung der basischen Funktionen in organische Überzugsmittel eingesetzt, welche nach dem Elektrotauchlackierverfahren kathodisch abgeschieden werden. Solche Überzugsmittel werden u. a. in der US-PS 4 174 332 oder der GB-PS 1 551 496 beschrieben. Es hat sich gezeigt, daß Isocyanatvorprodukte, deren Isocyanatwert auf etwa 55-60 % des ursprünglichen Wertes abgesunken sind, für die Herstellung brauchbarer kathodisch abscheidbarer Bindemittel nicht mehr geeignet sind. Die damit hergestellten Bindemittel zeigen schlechte Verdünnbarkeit sowie Änderungen im Abscheidungsverhalten, was zu ungleichmäßiger Filmausbildung führt.

Es ist daher notwendig, die Herstellung des Zwischenproduktes bei möglichst tiefer Temperatur durchzuführen, was zu einem erheblichen Kühlaufwand führt. Zudem muß das Zwischenprodukt unmittelbar nach seiner Herstellung weiterverarbeitet werden. Da jedoch bei der großtechnischen Produktion immer wieder Verzögerungen oder Unterbrechungen (z. B. durch Stromausfall, Kühlwasserausfall oder sonstige technische Probleme) auftreten können, ist das Risiko des materiellen und zeitlichen Verlustes sowie der Qualitätsschwankung sehr groß.

Untersuchungen, die zur Stabilisierung von mit Alkanolaminen partiell blockierten Di- oder Polyisocyanaten durchgeführt wurden, zeigten überraschenderweise dass durch die Zugabe von Hydrazinhydrat unerwünschte Nebenreaktionen bei der Herstellung und Lagerung verhindert werden können.

Gegenstand der vorliegenden Erfindung sind daher mit Alkanolaminen partiell blockierte Di- oder Polyisocyanate, die dadurch gekennzeichnet sind, dass sie als Zusatzmittel zur Unterdrückung von Nebenreaktionen bei der Herstellung und Lagerung Hydrazinhydrat, berechnet als 100 %iges Hydrazinhydrat, in einer Menge von 0,005 bis 0,5 Gew.-%, bezogen auf das vorhandene Alkanolamin, enthalten.

Vorzugsweise enthalten die mit Alkanolaminen partiell blockierten Di- oder Polyisocyanate das Hydrazinhydrat in einer Menge von 0,01 bis 0,2 Gew.-%, berechnet als 100 %iges Hydrazinhydrat, und bezogen auf das vorhandene Alkanolamin.

Ein weiterer Gegenstand der vorliegenden Erfindung ist ein Verfahren zur Stabilisierung von mit Alkanolaminen partiell blockierten Di- oder Polyisocyanaten, das dadurch gekennzeichnet ist, dass man ihnen als Zusatzmittel zur Unterdrückung von Nebenreaktionen bei der Herstellung und Lagerung Hydrazinhydrat, berechnet als 100 %iges Hydrazinhydrat, in einer Menge von 0,005 bis 0,5 Gew.-%, bezogen auf das vorhandene Alkanolamin, zusetzt.

Des weiteren betrifft die vorliegende Erfindung die Verwendung von Hydrazinhydrat als Zusatzmittel zur Unterdrückung von Nebenreaktionen bei der Herstellung und Lagerung von mit Alkanolaminen

partiell blockierten Di- oder Polyisocyanaten in einer Menge von 0,005 bis 0,5 Gew.-%, berechnet als 100 %iges Hydrazinhydrat, und bezogen auf das vorhandene Alkanolamin.

Die wesentlichen Vorteile, die durch den Zusatz von Hydrazinhydrat bei der Herstellung und Lagerung von mit Alkanolaminen partiell blockierten Di- oder Polyisocyanaten erzielt werden können, sind die folgenden :

1. größere Sicherheit bei der Herstellung des basischen Isocyanatzwischenproduktes und ein relativ stabiler Isocyanatwert ;

2. leichtere Abführung der durch die exotherme Reaktion entstehenden Wärme während der Umsetzung des Amins mit dem Polyisocyanat, da nötigenfalls eine Verlängerung der Zugabezeit oder Erhöhung der maximalen Reaktionstemperatur auf 40 °C möglich ist ;

3. gute Reproduzierbarkeit der Eigenschaften des Endproduktes (Viskosität, Löslichkeit, elektrochemisches Verhalten), welche im wesentlichen Ausmaß von der Qualität des basischen Isocyanatzwischenproduktes beeinflußt werden.

Das Hydrazinhydrat kann in allen handelsüblichen Lieferformen eingesetzt werden, vorzugsweise wird jedoch 100 %iges Hydrazinhydrat verwendet. In dieser Form beträgt der aktive Hydrazingehalt 64 %.

Die Herstellung der stabilisierten, mit Alkanolaminen partiell blockierten Di- oder Polyisocyanate erfolgt zweckmässigerweise so, dass man das Polyisocyanat, verdünnt mit einem isocyanatinerten Lösungsmittel vorlegt, und unter Kühlung und Rühren während 30 bis 120 Minuten, vorzugsweise 60 bis 75 Minuten, das Hydrazinhydrat enthaltende Alkanolamin bei einer Temperatur von 10 bis 40 °C, vorzugsweise 15 bis 30 °C, zugibt. Unmittelbar nach der Zugabe des mit dem Hydrazinhydrat versetzten Alkanolamines kann das partiell blockierte Di- oder Polyisocyanat weiter verarbeitet werden, beispielsweise zu den Zwecken eingesetzt werden, die in den weiter vorne genannten Patentschriften beschrieben sind.

Es zeigte sich, dass das als Stabilisierungsmittel verwendete Hydrazinhydrat keinen Einfluss auf die Weiterverarbeitung der fraglichen partiell blockierten Di- oder Polyisocyanate ausübt, und auch im Endprodukt konnte kein Einfluss festgestellt werden.

Als Ausgangsmaterialien für die Herstellung der mit Alkanolaminen partiell blockierten Di- oder Polyisocyanate können aromatische, cycloaliphatische und aliphatische Di- und Polyisocyanate verwendet, werden, beispielsweise diejenigen Produkte, die in GB-A 1 551 496 genannt sind. Als Alkanolamine, die zur Blockierung dieser Di- oder Polyisocyanate herangezogen werden, sind Dimethyläthanolamin und seine höheren Homologen und Isomeren verwendbar, und Beispiele hierfür sind ebenfalls in GB-A 1 551 496 genannt.

Die nachfolgenden Beispiele erläutern die Erfindung ohne sie zu beschränken. Alle Mengenangaben sind Gewichtsteile, Prozentangaben beziehen sich auf Gewichtsprozente.

Beispiel 1-6 und Vergleichsbeispiele 7-9

Das mit Äthylenglykolmonoäthylätheracetat verdünnte Diisocyanat wird auf unter 20 °C gekühlt und unter Feuchtigkeitsausschluß das Altanolamin, welches vorher mit 1 000 ppm Hydrazinhydrat (100 %ig) gründlich vermischt wurde, unter Rühren und Kühlung langsam zugegeben. Die Mengen der Reaktionspartner sowie die Reaktionsbedingungen sind in der Tabelle 1 angegeben. Die Menge an Lösungsmittel wird so gewählt, daß das fertige Zwischenprodukt einen Festkörpergehalt von 60 % aufweist. Bei den angegebenen Beispielen liegt die untere Grenze der Brauchbarkeit bei Weiterverarbeitung gemäß GB-PS 1 551 496 bei einem NCO-Wert von ca. 9 %-10 %.

In der Tabelle ist die Abnahme des NCO-Wertes in Abhängigkeit von der Zeit der Reaktionstemperatur angeführt. Wie sich aus den Vergleichsbeispielen ergibt, müssen die Zwischenprodukte ohne Zusatz von Hydrazinhydrat sofort weiterverarbeitet werden, während mit der erfindungsgemäßen Inhibierung eine wesentlich größere Toleranz gegeben ist. Die Weiterverarbeitung erfolgt gemäß den Angaben der genannten Patente.

Erläuterungen der Abkürzungen in der Tabelle 1 :

TDI : Toluylendiisocyanat (handelsübliches Isomerengemisch)
IPDI : Isophorondiisocyanat
DMÄA : Dimethyläthanolamin
DÄÄA : Diäthyläthanolamin
DMPA : Dimethylpropanolamin

(Siehe die Tabelle 1, Seite 4)

Tabelle 1

| | Reaktions-komponenten | | Reaktions-bedingungen | | Isocyanatwert (auf Festkörper berechnet) | | | | |
|---|---|---|---|---|---|---|---|---|---|
| | Polyiso-cyanat | Amin | Zuga-bezeit | Tempe-ratur | theor. | nach Ende der Zugabe | + 1 Std. nach | + 3 Std. Ende der | + 5 Std. Zugabe |
| 1 | 174 TDI | 89 DMÄÄA | 60 min. | 15-25 °C | 15,9 % | 14,8 % | 14,5 % | 13,9 % | 12,5 % |
| 2 | 174 TDI | 89 DMÄÄA | 60 min. | 25-35 °C | 15,9 % | 14,2 % | 13,8 % | 13,0 % | 12,0 % |
| 3 | 174 TDI | 117 DÄÄA | 60 min. | 20-30 °C | 14,4 % | 13,5 % | 13,0 % | 12,4 % | 12,1 % |
| 4 | 174 TDI | 117 DÄÄA | 90 min. | 20-30 °C | 14,4 % | 13,0 % | 12,6 % | 11,8 % | 11,2 % |
| 5 | 174 TDI | 103 DMPA | 60 min. | 20-30 °C | 15,1 % | 14,1 % | 13,4 % | 12,8 % | 12,2 % |
| 6 | 222 IPDI | 89 DMÄA | 60 min. | 25-40 °C | 13,5 % | 13,2 % | 12,9 % | 12,5 % | 12,3 % |
| 7 | wie 2) jedoch ohne Hydrazinhydrat | | | | 15,9 % | 12,0 % | 9,2 % | unbrauchbar | |
| 8 | wie 3) jedoch ohne Hydrazinhydrat | | | | 14,4 % | 12,5 % | 10,4 % | unbrauchbar | |
| 9 | wie 4) jedoch ohne Hydrazinhydrat | | | | 14,4 % | 10,7 % | 9,0 % | unbrauchbar | |

**Ansprüche**

1. Mit Alkanolaminen partiell blockierte Di- oder Polyisocyanate, dadurch gekennzeichnet, dass sie als Zusatzmittel zur Unterdrückung von Nebenreaktionen bei der Herstellung und Lagerung Hydrazinhydrat, berechnet als 100 %iges Hydrazinhydrat, in einer Menge von 0,005 bis 0,5 Gew.-%, bezogen auf das vorhandene Alkanolamin, enthalten.

2. Mit Alkanolaminen partiell blockierte Di- oder Polyisocyanate nach Anspruch 1, dadurch gekennzeichnet, dass sie das Hydrazinhydrat in einer Menge von 0,01 bis 0,2 Gew.-%, berechnet als 100 %iges Hydrazinhydrat und bezogen auf das vorhandene Alkanolamin, enthalten.

3. Verfahren zur Stabilisierung von mit Alkanolaminen partiell blockierten Di- oder Polyisocyanaten, dadurch gekennzeichnet, dass man ihnen als Zusatzmittel zur Unterdrückung von Nebenreaktionen bei der Herstellung und Lagerung Hydrazinhydrat, berechnet als 100 %iges Hydrazinhydrat, in einer Menge von 0,005 bis 0,5 Gew.-%, bezogen auf das vorhandene Alkanolamin, zusetzt.

4. Verwendung von Hydrazinhydrat als Zusatzmittel zur Unterdrückung von Nebenreaktionen bei der Herstellung und Lagerung von mit Alkanolaminen partiell blockierten Di- oder Polyisocyanaten in einer Menge von 0,005 bis 0,5 Gew.-%, berechnet als 100 %iges Hydrazinhydrat, und bezogen auf das vorhandene Alkanolamin.

**Claims**

1. With alkanolamines partially blocked di- or polyisocyanates, characterised in that they contain as additive to suppress side reactions upon their preparation or storage hydrazine hydrate, calculated as 100 % hydrazine hydrate, at a level of from 0.005 to 0.5 % by weight, calculated on the alkanolamine present.

2. With alkanolamines partially blocked di- or polyisocyanates according to claim 1, characterised in that they contain hydrazine hydrate in a quantity of from 0.01 to 0.2 % by weight, calculated as 100 % hydrazine hydrate and on the alkanolamine.

3. Process for stabilising di- or polyisocyanates partially blocked with alkanolamines, characterised in that for suppressing side reactions during their preparation or storage, they contain hydrazine hydrate, calculated as 100 % hydrazine hydrate, in a quantity of from 0.005 % to 0.5 %, calculated on the alkanolamine.

4. Use of hydrazine hydrate as additive for suppressing side reactions during the preparation and storage of di- or polyisocyanates partially blocked with alkanolamines, in a quantity of from 0.005 to 0.5 % by weight, calculated as 100 % hydrazine hydrate and on the alkanolamine.

**Revendications**

1. Di- ou poly-isocyanates partiellement bloqués par des alcanolamines et caractérisés en ce qu'ils contiennent en tant qu'additif, en vue d'empêcher les réactions secondaires à la préparation et à la conservation, de l'hydrate d'hydrazine en quantité de 0,005 à 0,5 % en poids, exprimée en hydrate d'hydrazine à 100 %, par rapport à l'alcanolamine présente.

2. Di- ou poly-isocyanates partiellement bloqués par des alcanolamines selon la revendication 1,

caractérisés en ce qu'ils contiennent l'hydrate d'hydrazine en quantité de 0,01 à 0,2 % en poids, exprimée en hydrate d'hydrazine à 100 %, par rapport à l'alcanolamine présente.

3. Procédé pour stabiliser des di- ou poly-isocyanates partiellement bloqués par des alcanolamines, caractérisé en ce qu'on leur ajoute en tant qu'additif, pour empêcher les réactions secondaires à la préparation et au magasinage, de l'hydrate d'hydrazine en quantité de 0,005 à 0,5 % en poids, exprimée en hydrate d'hydrazine à 100 %, par rapport à l'alcanolamine présente.

4. Utilisation de l'hydrate d'hydrazine en tant qu'additif servant à empêcher les réactions secondaires à la préparation et à la conservation de di- ou poly-isocyanates partiellement bloqués par des alcanolamines, en quantité de 0,005 à 0,5 % en poids, exprimée en hydrate d'hydrazine à 100 %, par rapport à l'alcanolamine présente.